Europäisches Patentamt

European Patent Office

Office européen des brevets

(19)

(11) Numéro de publication : **0 165 857**
**B1**

(12) **FASCICULE DE BREVET EUROPÉEN**

(45) Date de publication du fascicule du brevet :
04.05.88

(51) Int. Cl.⁴ : **C 09 K  5/06**

(21) Numéro de dépôt : 85401111.1

(22) Date de dépôt : 06.06.85

(54) Appareil de stockage de froid par utilisation de la chaleur latente.

(30) Priorité : 18.06.84 FR 8409618

(43) Date de publication de la demande :
27.12.85 Bulletin 85/52

(45) Mention de la délivrance du brevet :
04.05.88 Bulletin 88/18

(84) Etats contractants désignés :
BE DE FR GB IT NL

(56) Documents cités :
DE-A- 1 551 368
FR-A- 1 516 109
US-A- 2 136 385
US-A- 2 989 856

(73) Titulaire : **SOCIETE COOL S.a.r.l.**
**Quai Jean Jaurès Boîte Postale 45**
**F-07800 La Voulte sur Rhône (FR)**

(72) Inventeur : **Berrebi, Georges**
**17, rue Barnave**
**F-26500 Bourg Les Valence (FR)**

(74) Mandataire : **Colas des Francs, Jean et al**
**Institut Français du Pétrole 4, Avenue de Bois Préau**
**F-92502 Rueil-Malmaison (FR)**

EP 0 165 857 B1

## Description

Le but de l'invention réside en l'utilisation d'un ou plusieurs mélanges eutectiques associés de manière judicieuse afin de stocker du froid. Selon la nature des mélanges eutectiques mis en œuvre, ce froid peut être restitué à une seule température si l'on utilise un seul mélange eutectique ou de manière graduelle si l'on associe plusieurs mélanges eutectiques dont les points de fusion, tous inférieurs à 0 °C, sont différents. Dans le cas où l'on associerait plusieurs mélanges eutectiques dans le même conditionnement, chacun d'entre eux serait indépendant des autres c'est-à-dire que le même conditionnement comporterait des compartiments indépendants et séparés entre eux par des cloisons étanches.

Un eutectique est un mélange de deux ou plusieurs constituants ; lors du changement de phase liquide-solide ou solide-liquide par variation de la température, la composition de la phase solide reste la même que celle de la phase liquide (pas de démixtion). Par ailleurs, ce changement de phase s'effectue à température constante.

Il existe plusieurs formules eutectiques dont un constituant est l'eau et dont les points de cristallisation (ou fusion) sont compris entre — 24 °C et 0 °C : mélanges de sels minéraux et d'eau ou de composés organiques et d'eau.

Le mélange eutectique 67,5 % pds eau + 32,5 % pds carbamide (ou carbonyl diamide : $CON_2H_4$) est utilisé dans la présente invention ; son point de cristallisation est de — 11,5 °C. Si on place ce mélange dans un congélateur à la température de — 25 °C, le mélange va cristalliser à la température de — 11,5 °C et une fois solide le mélange va jouer le rôle d'un accumulateur de frigories par utilisation de la chaleur latente. En effet, au cours du changement de phase liquide-solide, le froid est stocké par chaleur latente ; cette quantité de froid peut être récupérée, en cas de besoin, au cours du changement inverse de phase solide-liquide à la température strictement constante de — 11,5 °C. La quantité d'énergie stockée sous forme de froid à la température de — 11,5 °C est considérable : 79 Kcal ou 92 Wattheures par litre de solution. Ce type d'eutectique est décrit dans le brevet des Etats Unis d'Amérique n° 2136385 où l'on utilise notamment un mélange d'eau et d'urée.

En pratique, dans la présente invention les mélanges renferment 65-70 % d'eau et 30-35 % de carbamide pour être utilisés, de préférence 67-68 % d'eau et 32-33 % de carbamide.

Il s'avère, et, c'est là l'objet de l'invention, que la présence d'un agent nucléant dans le mélange eau-carbamide, permet une cinétique de cristallisation beaucoup plus grande et plus homogène. On a ainsi pu faire ressortir le rôle déterminant de composés du type aluminate de nickel, aluminate de cobalt, silicate de nickel, silicate de cobalt, alumino silicate de nickel et alumino silicate de cobalt. La structure cristalline de ces composés, de préférence du type spinelle, permet d'initier par phénomène d'isomorphie la cristallisation du mélange eutectique en évitant notamment une éventuelle surfusion du mélange.

La teneur de cet agent nucléant est de préférence de 0,1 à 5 % pds par rapport au mélange eutectique décrit ci-dessus.

Par ailleurs si l'on utilise ce mélange eutectique eau-carbamide, il est préférable de rajouter en plus de cet agent nucléant 0,1 à 2 % pds d'un composé du type acide organique, par exemple acide benzoïque, acide acétylsalicylique, acide acétique dont le rôle essentiel est de maintenir le pH du mélange inférieur à 6 (de préférence 3 à 6). Un acide minéral peut aussi être utilisé dans les mêmes proportions.

La forme du conteneur ou « pack » dans lequel va être placé ce mélange eutectique ainsi défini permettra, si elle est judicieusement choisie, de :

contrôler la vitesse de cristallisation en phase d'accumulation de froid,

maîtriser la cinétique de fusion en phase de survie ou de restitution du froid stocké,

optimiser la conductivité thermique de la phase solide à la surface géométrique d'échange.

Si, pour une raison ou une autre, le groupe frigorifique du congélateur s'arrête, les conteneurs placés à l'intérieur du congélateur fonctionneront comme source de froid. Ils fourniront les frigories nécessaires pour compenser les pertes thermiques du congélateur (notamment dues au manque d'isolation) et permettront de maintenir la température intérieure à un niveau acceptable pendant tout le temps de l'arrêt, si celui-ci demeure de durée raisonnable.

Les conteneurs seront complètement « déchargés » quand toute leur phase solide se sera transformée en phase liquide.

Dès le redémarrage du groupe frigorifique du congélateur, les conteneurs se rechargeront automatiquement et seront de nouveau prêts pour d'autres opérations de survie.

Le conteneur est un récipient creux fermé, substantiellement étanche, ayant une conductivité thermique substantielle. Il est réalisé en matériau rigide ou de préférence semi-rigide pour résister aux variations de pression ; ce conteneur est étanche ou comporte un orifice obturable de manière étanche. Le matériau doit avoir une conductivité thermique appréciable et pourra être en métal, en matériau plastique, comme décrit par exemple dans la demande de brevet allemand n° 1551368. On utilise de préférence un matériau plastique en raison de sa conductivité thermique intermédiaire entre celle d'un métal et celle d'un isolant et qui permet donc une fourniture contrôlée de frigories.

La figure 1 représente un conteneur 1, de forme rectangulaire, comportant une ouverture 2. Après remplissage avec un eutectique, l'ouverture 2 est fermée de manière à rendre l'ensemble totalement étanche. La fermeture peut être amovile ou, de préférence, permanente.

La figure 2 représente un conteneur double 3-4 à paroi commune 5 pouvant renfermer 2 eutectiques distincts.

La figure 3 représente un conteur triple 6-7-8 comportant des parois communes deux à deux 9 et 10.

Si l'on veut réserver l'utilisation de ces conteneurs plutôt pour le camping que pour la survie autonome des congélateurs, il est préférable d'associer plusieurs enceintes renfermant des mélanges eutectiques.

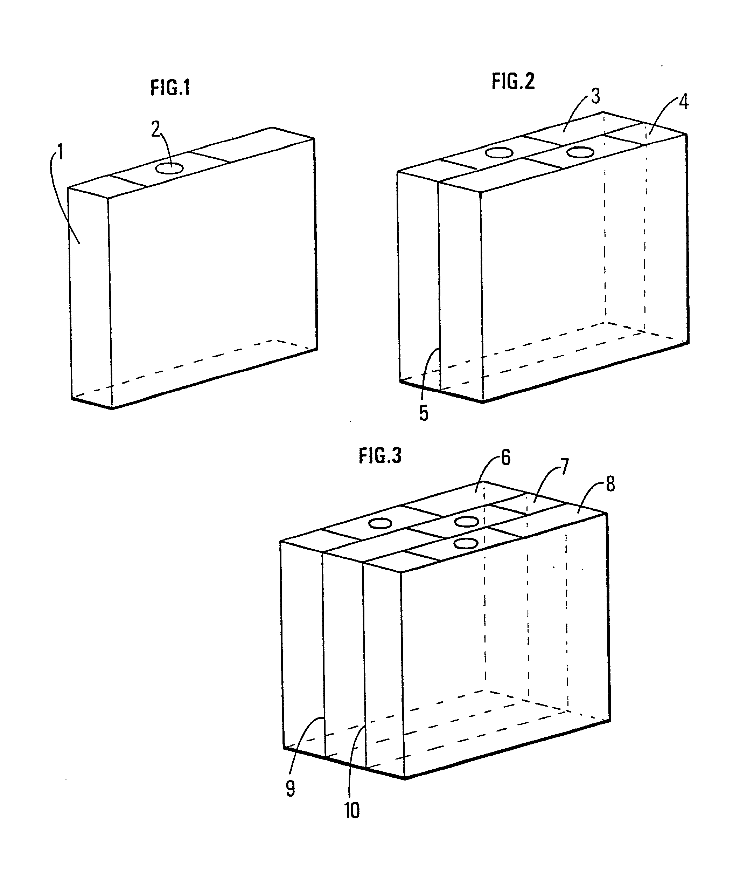

Le conteneur peut alors comporter 2, 3 ou plus compartiments (fig 2 et 3) indépendants entre eux quoique demeurant en contact d'échange thermique à travers une paroi (compartiments contigus). Il existe par exemple un mélange eutectique bien connu 39 % pds $MgSO_4$ $7H_2O$ + 61 % pds d'$H_2O$ dont le point de cristallisation (ou fusion) est de — 5,2 °C l'association dans le même conteneur, comportant une paroi étanche interne, des deux mélanges eutectiques eau-carbamide, point de cristallisation — 11,5 °C et eau-sulfate de magnésium heptahydraté, point de cristallisation — 5,2 °C, permet le transfert des frigories de chaleur latente du premier mélange au second mélange qui restera toujours solide même si la température est comprise entre — 11,5 °C et — 5,2 °C.

On a confirmé le rôle déterminant des agents nucléants indiqués ci-dessus dans la qualité, la rapidité et l'homogénéité de la cristallisation (aluminate, silicate, silico-aluminate de nickel ou de cobalt) tant pour l'eutectique à base de sulfate de magnésium que pour l'eutectique à base de carbamide.

Des essais ont aussi été réalisés avec le couple de deux eutectiques :

94, 4 % pds $H_2O$ + 5,6 % pds de $Na_2CO_3$ ; point de cristallisation — 2,1 °C, 73,1 % pds $H_2O$ + 26,9 % pds de $K_2HPO_4$ : point de cristallisation — 12,0 °C,

Dans chacun des mélanges addition de 1 % pds d'agent nucléant du type silico aluminate de nickel spinellisé.

Ainsi qu'avec le couple :

91,2 % pds $H_2O$ + 8,8 % pds $KNO_3$ : point de cristallisation — 2,8 °C ; 83,8 % pds $H_2O$ + 16,2 % pds KCl : point de cristallisation — 11,5 °C

Addition de 0,5 % pds d'agent nucléant du type silicate de cobalt spinellisé dans les deux mélanges.

Les conteneurs à deux compartiments placés dans un congélateur pendant quelques heures afin de cristalliser les deux mélanges contenus ont ensuite été utilisés dans une glacière pour conserver des boissons et des aliments au froid ; l'ensemble a fonctionné avec succès puisque l'autonomie du froid a été multipliée par un coefficient égal à 4.

Selon un autre mode de réalisation, on peut utiliser un conteneur à 3 compartiments pour lequel le troisième compartiment contient de l'eau dont le point de cristallisation est de 0 °C. En utilisant les eutectiques ci-dessus, carbamide et sulfate de magnésium pour les premier et deuxième compartiments, on a opéré avec succès puisque entre — 12 °C et 0 °C le transfert des frigories a été opéré avec ses 3 paliers, chacun d'entre eux correspondant à la température de fusion individuelle.

Ces conteneurs à 1, 2 ou 3 compartiments peuvent être utilisés pour la sauvegarde des aliments congelés dans le cas de panne du congélateur ou coupure de courant en multipliant l'autonomie du congélateur. Ils peuvent être aussi utilisés pour des applications du type camping.

Quel que soit le nombre de compartiments (1, 2, 3 ou plus), la forme est de préférence, approximativement, celle d'un parallélépipède rectangle dont les surfaces peuvent être, par exemple, planes, alvéolées ou légèrement arrondies et comporter éventuellement des décrochements facilitant par exemple l'empilage.

En cas de compartiment unique ou pour chaque compartiment d'un ensemble, le rapport épaisseur sur longueur est avantageusement de 0,02 à 0,4, de préférence 0,05 à 0,2, et le rapport largeur sur longueur est avantageusement 0,1 à 1, de préférence 0,15 à 0,6.

## Revendications

1. Le produit industriel qui est constitué par au moins un récipient creux rigide ou semi-rigide clos ou obturable, substantiellement étanche, ayant une conductivité thermique appréciable et, dans ce récipient, un mélange de constitution sensiblement eutectique dont le point de fusion eutectique est entre — 5 et — 30 °C, ce mélange contenant approximativement 30-35 % en poids de carbamide et 65-70 % en poids d'eau et caractérisé en ce qu'il renferme en outre au moins un agent nucléant choisi entre un aluminate, silicate ou silico-aluminate de nickel ou cobalt de structure spinelle.

2. Produit selon la revendication 1 dans lequel le mélange eutectique renferme 0,1 à 5 % en poids de l'agent nucléant.

3. Un produit selon l'une des revendications 1 et 2 renfermant en outre au moins un acide organique ou minéral en quantité suffisante pour amener le pH à une valeur entre 3 et 6.

4. Un produit selon la revendication 3 dans lequel l'acide organique est l'acide benzoïque.

5. Un produit selon l'une des revendications 1 à 4 constitué par la combinaison d'au moins deux enceintes contiguës, l'une des enceintes renfermant un premier mélange eutectique selon la revendication 1 avec ou sans les additifs des revendications 2 à 4 et l'autre enceinte renfermant un second mélange eutectique avec ou sans les additifs des revendications 2 à 4, le second mélange eutectique étant toutefois distinct de celui de la revendication 1.

6. Un produit selon la revendication 5, dans lequel une troisième enceinte contiguë répondant elle aussi à la définition de la revendication 1 renferme de l'eau au lieu de mélange eutectique.

7. Un produit selon la revendication 5 dans lequel le premier eutectique est celui de la revendication 1 et le second eutectique est le mélange sulfate de magnésium heptahydraté-eau.

8. L'utilisation du produit de l'une des revendications 1 à 7 comme source de froid, ladite utilisation comportant la congélation du mélange eutectique au contact d'une source de froid et sa fusion ultérieure au contact d'un milieu à refroidir.

## Claims

1. The industrial product which is formed by at least one rigid or semi-rigid hollow container which is closed or which can be closed and which is substantially sealed, having an appreciable level of thermal conductivity, and, in said container, a mixture of substantially eutectic constitution whose eutectic melting point is between — 5 und — 30 °C, said mixture containing approximately 30 to 35 % by weight of carbamide and 65 to 70 % by weight of water, and characterised in that it further contains at least one nucleating agent selected from an aluminate, silicate or silico-aluminate of nickel or cobalt of spinel structure.

2. A product according to claim 1 wherein the eutectic mixture contains from 0.1 to 5 % by weight of the nucleating agent.

3. A product according to one of claims 1 and 2 and further containing at least one organic or inorganic acid in a sufficient amount to adjust the pH to a value of between 3 and 6.

4. A product according to claim 3 wherein the organic acid is benzoic acid.

5. A process according to one of claims 1 to 4 which is formed by the combination of at least two contiguous enclosures, one of the enclosures containing a first eutectic mixture according to claim 1 with or without the additives of claims 2 to 4 and the other enclosure containing a second eutectic mixture with or without the additives of claims 2 to 4, the second eutectic mixture however being different from that of claim 1.

6. A product according to claim 5 wherein a third contiguous enclosure which also corresponds to the definition of claim 1 contains water instead of eutectic mixture.

7. A product according to claim 5 wherein the first eutectic is that of claim 1 and the second eutectic is a mixture of magnesium sulphate heptahydrate and water.

8. Use of the product of one of claims 1 to 7 as a cold source, said use comprising freezing the eutectic mixture in contact with a cold source and subsequent melting thereof in contact with a medium to be cooled.

## Patentansprüche

1. Industrieerzeugnis, das aus wenigstens einem hohlen starren oder halbstarren, geschlossenen oder verschließbaren, im wesentlichen dichten Behälter besteht, der eine merkliche Wärmeleitfähigkeit besitzt und, in diesem Behälter ein Gemisch von im wesentlichen eutektischer Konstitution, dessen eutektischer Schmelzpunkt zwischen — 5 und — 30 °C liegt, wobei dieses Gemisch etwa 30-35 Gew. - % Carbamid und 65-70 Gew. - % Wasser enthält, dadurch gekennzeichnet, daß es ausserdem wenigstens ein keimbildendes Mittel enthält, das ein Aluminat, Silikat oder Silikoaluminat von Kobalt oder Nickel von Spinellstruktur ist.

2. Erzeugnis nach Anspruch 1, dadurch gekennzeichnet, daß das eutektische Gemisch 0,1 bis 5 Gew. - % keimbildendes Mittel enthält.

3. Erzeugnis nach einem der Ansprüche 1 und 2, dadurch gekennzeichnet, daß es ausserdem wenigstens eine organische oder mineralische Säure in ausreichender Menge enthält, um das pH auf einen Wert zwischen 3 und 6 einzustellen.

4. Erzeugnis nach Anspruch 3, dadurch gekennzeichnet, daß die organische Säure Benzoesäure ist.

5. Erzeugnis nach einem der Ansprüche 1 bis 4, das aus der Kombination von wenigstens zwei aneinander angrenzenden Gefäßen besteht, wobei eines der Gefäßen ein erstes eutektisches Gemisch nach Anspruch 1, mit oder ohne Additive der Ansprüche 2 bis 4 enthält, während das andere Gefäß ein zweites eutektisches Gemisch mit oder ohne die Additive der Ansprüche 2 bis 4 enthält und das zweite eutektische Gemisch von demjenigen nach Anspruch 1 völlig verschieden ist.

6. Erzeugnis nach Anspruch 5, dadurch gekennzeichnet, daß ein drittes angrenzendes Gefäß, das ebenfalls der Definition des Anspruchs 1 entspricht, Wasser statt des eutektischen Gemisches enthält.

7. Erzeugnis nach Anspruch 5, dadurch gekennzeichnet, daß das erste Eutektikum dem nach Anspruch 1 entspricht und das zweite Eutektikum ein Gemisch von Magnesiumheptahydrat-Wasser ist.

8. Verwendung des Erzeugnisses nach einem der Ansprüche 1 bis 7 als Kältequelle, wobei diese Verwendung das Gefrieren des eutektischen Gemisches in Kontakt mit einer Kältequelle und dessen späteres Schmelzen in Kontakt mit einem abzukühlenden Medium umfasst.

FIG.1

FIG.2

FIG.3